# EUROPÄISCHE PATENTSCHRIFT

(11) **EP 3 247 651 B1**
(45) Veröffentlichungstag und Bekanntmachung des Hinweises auf die Patenterteilung: **03.03.2021**
(21) Anmeldenummer: 16701292.1
(22) Anmeldetag: 21.01.2016
(51) Int. Cl.: B65D 81/26

(54) **BEHÄLTER MIT BEHANDLUNGSMITTEL SOWIE VERFAHREN ZU DESSEN HERSTELLUNG**
CONTAINER COMPRISING TREATMENT MEANS AND METHOD FOR THE PRODUCTION OF SAME
CONTENANT COMPRENANT UN MOYEN DE TRAITEMENT ET PROCÉDÉ DE FABRICATION DUDIT CONTENANT

(30) Priorität: 22.01.2015 DE 102015100947
(43) Veröffentlichungstag der Anmeldung: 29.11.2017
(73) Patentinhaber: Sanner GmbH, 64625 Bensheim (DE)
(72) Erfinder: SCHNEIDER, Matthias, 55262 Heidesheim (DE)
(74) Vertreter: Reiser & Partner Patentanwälte mbB
(86) Internationale Anmeldenummer: PCT/EP2016/051210
(87) Internationale Veröffentlichungsnummer: WO 2016/116551

(56) Entgegenhaltungen:
- EP-A1- 0 270 868
- JP-A- 2002 274 575
- JP-A- 2002 274 576

## Beschreibung

Die Erfindung betrifft einen Behälter mit einem Behälterkörper, der einen Aufnahmeraum für ein Verpackungsgut bildet, wobei der Behälterkörper eine Seitenwandung und einen integral mit der Seitenwandung verbundenen Behälterboden aufweist, wobei der Behälterkörper eine Öffnung aufweist, wobei der Behälterkörper eine Kammer aufweist, die mit einem festen Behandlungsstoff befüllt ist, wobei die Kammer mit einer Abdeckung versehen ist, welche ein Austreten des festen Behandlungsstoffes aus der Kammer verhindert und feuchtigkeitsdurchlässig und/oder gasdurchlässig ist. Bei dem Behälter handelt es sich insbesondere um einen Verpackungsbehälter. Die Erfindung betrifft darüber hinaus ein Verfahren zur Herstellung eines solchen Behälters.

Behälter, die einen Behälterkörper mit einem Aufnahmeraum und einer mit einer Abdeckung versehenen Kammer aufweisen sind bekannt. In solchen Kammern werden regelmäßig Trockenmittel als Behandlungsmittel vorgesehen. Auf diese Weise kann ein im Aufnahmeraum angeordnetes Verpackungsgut zuverlässig auch über längere Zeiträume trocken gehalten werden.

Die US 3,135,566 beschreibt einen röhrenförmigen Behälter zur Aufbewahrung von Geldstücken. Der Behälter weist einen Behälterkörper mit einer Seitenwandung auf, die integral mit dem Behälterboden ausgebildet ist. In dem unteren Bereich des Behälterkörpers ist eine Kammer für Trockenmittel angeordnet. An der Innenseite der Seitenwandung ist ein ringförmiger Sockel vorgesehen, auf dem eine Abdeckung angeordnet ist. Die Abdeckung wird durch einen Ring aus Gummimaterial auf dem Sockel gehalten. Der vorbekannte Behälter ist aufwendig und teuer in der Herstellung.

Die JP 2002-284249 A beschreibt einen weiteren Behälter. Dieser weist einen Aufnahmeraum und eine Kammer für Trockenmittel auf. Der Behälterkörper weist zwei Öffnungen auf. An der Innenseite der Seitenwandung ist ein Sockel vorgesehen. Auf Seiten der Kammer ist ein Behälterboden vorgesehen, der durch einen separat hergestellten Deckel gebildet ist. Zum Befüllen der Kammer wird der Behälter zunächst umgedreht und die Abdeckung der Kammer auf den Sockel aufgelegt. Die Kammer wird dann mit Trockenmittel befüllt und mit dem Deckel verschlossen. Auch dieser Behälter ist aufwendig und teuer in der Herstellung.

Die US 2013/0213828 A1 beschreibt einen weiteren Behälter mit einem Aufnahmeraum und einer Kammer für Trockenmittel. Der Behälterkörper weist ein Rippenprofil auf, in das eine Abdeckung für die Kammer eingeschnappt ist. Der vorbekannte Behälterkörper ist nicht als Spritzgussteil ausgebildet. Der Behälterkörper ist wiederum aufwendig und teuer in der Herstellung.

Die JP 2002-274576 beschreibt einen Behälter nach dem Oberbegriff von Anspruch 1. Der Behälterkörper weist eine Seitenwandung und einen mit der Seitenwandung verbundenen Behälterboden auf. Zudem weist der Behälterkörper eine Kammer auf, die mit einem Behandlungsstoff befüllt ist, wobei die Kammer mit einer Abdeckung versehen ist, welche feuchtigkeitsdurchlässig ist. An der Innenseite der Seitenwandung ist ein Vorsprung angeordnet, hinter dem die Abdeckung gehalten ist Dieses Dokument offenbart auch ein Verfahren zum Herstellen eines Behälters mit der Schritten von Spritzgießen eines Behälterkörpers in einer Spritzgießform, wobei die Spritzgießform derart ausgebildet ist, dass der Behälterkörper eine Seitenwandung, einen mit der Seitenwandung verbundenen Behälterboden, eine Öffnung, eine Kammer für einen Behandlungsstoff und ein an der Innenseite der Seitenwandung angeordnetes Rastmittel für eine Abdeckung der Kammer aufweist, Entformen des Behälterkörpers aus der Spritzgießform, Einfüllen des Behandlungsstoffes in die Kammer mit einer Einfüllvorrichtung, Einbringen einer Abdeckung der Kammer durch die Öffnung, wobei die Abdeckung beim Einbringen unter Verformung der Abdeckung an der ersten Gleitfläche entlanggleitet, bevor sie hinter dem Rastmittel einrastet und ein Austreten des festen Behandlungsstoffes aus der Kammer verhindert.

Ein weiterer Behälter mit ähnlichen Merkmalen ist aus der JP 2002-274575 bekannt.

Die EP 0 270 868 A1 beschreibt einen Behälter für diagnostische Testträger.

Dieser weist einen Behälterkörper auf, in den ein Bodenelement von unten einsetzbar ist. Der Behälterkörper weist auf seiner Innenseite einen Vorsprung auf.

Die Erfindung stellt sich die Aufgabe, einen Behälter mit einem Aufnahmeraum und einer Kammer für ein Behandlungsmittel, wie insbesondere ein Trockenmittel, anzugeben, der kostengünstig hergestellt werden kann und darüber hinaus einfach in der Handhabung ist. Die Erfindung stellt sich darüber hinaus die Aufgabe, ein Verfahren zur Herstellung eines solchen Behälters anzugeben.

Diese Aufgabe wird durch einen Behälter mit den Merkmalen von Anspruch 1 gelöst. Demnach ist bei einem eingangs genannten Behälter vorgesehen, dass der Behälterkörper ein Spritzgussteil aus Kunststoff aufweist, das den Behälterboden und die integral mit dem Behälterboden verbundene Seitenwandung bildet, und dass an einer Innenseite der Seitenwandung ein Rastmittel angeordnet ist, hinter dem die Abdeckung eingerastet ist. Ein solcher Behälter kann kostengünstig und mit hoher Qualität hergestellt werden. Da der Behälterboden integral mit der Seitenwandung im Spritzgussverfahren hergestellt ist, ist die Herstellung und Montage eines separat hergestellten Behälterbodens nicht erforderlich. Aufgrund des an der Seitenwandung angeordneten Rastmittels kann die Abdeckung einfach und schnell eingesetzt und eingerastet werden. Bei der Herstellung des Spritzgussteils können Behälterboden und Seitenwandung in demselben Spritzgießvorgang materialeinheitlich hergestellt werden. Der feste Behandlungsstoff kann insbesondere ein Trockenmittel, wie z.B. Silicagel sein. Es können aber auch andere Behandlungsstoffe mit fester Konsistenz, wie z.B. Duftstoffe, Wirkstoffe oder Feuchtemittel vorgesehen sein. Die Abdeckung verhindert, dass der feste Behandlungsstoff aus der Kammer austreten und in den Aufnahmeraum gelangen kann. Eine feuchtigkeitsdurchlässige Abdeckung lässt zu, dass Feuchtigkeit aus dem Aufnahmeraum zu dem Trockenmittel gelangt und dort gebunden wird. Eine gasdurchlässige Abdeckung ermöglicht, dass von einem Behandlungsstoff abgegebenen Duftstoffe oder Wirkstoffe aus der Kammer in der Aufnahmeraum gelangen. Der Behälter kann insbesondere als Verpackungsbehälter ausgebildet sein. Er eignet sich besonders für feuchtigkeitsempfindliches Verpackungsgut und kann insbesondere als Behälter für pharmazeutische Produkte, wie Medikamente ausgebildet sein. Darüber hinaus eignet sich der Behälter insbesondere zur Verpackung von chemischen Stoffen und Analysestoffen, wie z.B. Teststreifen.

Eine vorteilhafte Ausgestaltung der Erfindung sieht vor, dass das Rastmittel einen Vorsprung aufweist, der an der Innenseite der Seitenwand angeordnet ist. Der Vorsprung kann einen Hinterschnitt bilden, der das Einrasten der Abdeckung ermöglicht. Der Vorsprung kann z.B. ringförmig umlaufend ausgebildet sein. Es können auch mehrere der Vorsprünge, z.B. in Form von Erhebungen oder Noppen vorgesehen sein.

In vorteilhafter Weise springt das Rastmittel, insbesondere der Vorsprung, gegenüber der Innenseite der Seitenwandung um einen Wert zwischen 0,1 mm und 1,0 mm vor. Besonders bevorzugt ist, wenn das Rastmittel gegenüber der Innenseite der Seitenwandung um einen Wert zwischen 0,15 mm und 0,5 mm vorspringt. Diese Gestaltung ermöglicht einerseits eine einfache und kostengünstige Herstellung im Wege des Spritzgussverfahrens. Der Behälterkörper kann bei dieser Gestaltung insbesondere durch Zwangsentformung entformt werden. Zudem ermöglicht diese Gestaltung eine sichere Fixierung der Abdeckung und ein einfaches Einrasten beim Einbringen.

Erfindungsgemäß ist vorgesehen, dass das Rastmittel an seiner zu der Öffnung weisenden Seite eine zu einer Längsachse des Behälterkörpers geneigte erste Gleitfläche aufweist, an der die Abdeckung beim Einbringen unter Verformung der Abdeckung entlanggleitet, bevor sie hinter dem Rastmittel einrastet. Auf diese Weise wird das Einbringen der Abdeckung erleichtert und gleichwohl eine zuverlässige Fixierung ermöglicht. Die erste Gleitfläche ist mit einem Neigungswinkel von weniger als 20 °, besonders bevorzugt von weniger 15 ° zu der Längsachse des Behälterkörpers geneigt.

Weiterhin ist bevorzugt, wenn der Neigungswinkel größer als 10 ° ist.

Der beanspruchte Behälter sieht vor, dass das Rastmittel auf seiner der Öffnung abgewandten Seite eine zur Längsachse des Behälterkörpers geneigte zweite Gleitfläche aufweist. Diese Gestaltung erleichtert insbesondere die Herstellung. Dabei ist die zweite Gleitfläche mit einem Neigungswinkel von weniger als 45 °, besonders bevorzugt von weniger als 35 ° zur Längsachse des Behälterkörpers geneigt. Der Neigungswinkel der zweite Gleitfläche ist größer als 20 °.

Erfindungsgemäß ist weiter bevorzugt, dass die Abdeckung auf einer der Kammer zugewandten Seite des Rastmittels angeordnet ist. Auf diese Weise kann das Rastmittel die Abdeckung in ihrer Position halten.

Eine weitere Verbesserung wird dann erreicht, wenn die Abdeckung an der Seitenwandung in einem an das Rastmittel angrenzenden Bereich der Seitenwandung anliegt. Auf diese Weise wird u.a. ein Austreten des Behandlungsstoffes aus der Kammer verhindert.

Weiterhin ist erfindungsgemäß bevorzugt, dass das maximale Volumen der Kammer, das durch die Lage des Rastmittels und die sich daraus ergebende Position der Abdeckung bestimmt ist, etwas größer ist als das Volumen des darin aufgenommenen Behandlungsstoffes. Auf diese Weise wird insbesondere die Herstellung vereinfacht, da die Abdeckung dann leichter eingerastet werden kann. Dabei ist bevorzugt, wenn das Volumen der Kammer 1% bis 10 % größer ist als das Volumen des in der Kammer aufgenommen Behandlungsmittels.

Eine weitere vorteilhafte Ausgestaltung der Erfindung sieht vor, dass die Seitenwandung auf der der Kammer zugewandten Seite der Abdeckung keinen Vorsprung zum Fixieren der Abdeckung aufweist. Die Abdeckung liegt in diesem Fall auf dem Behandlungsstoff auf und wird durch diesen daran gehindert, sich in einer nachteiligen Weise zu verschieben.

Die Montage wird dadurch erleichtert, dass die Abdeckung derart elastisch verformbar ist, dass sie beim Einbringen der Abdeckung an dem Rastmittel vorbei bewegt werden kann. Zudem unterstützt diese Elastizität, dass die Abdeckung sich nach dem Einbringen nicht ungewollt verschiebt.

Erfindungsgemäß ist weiterhin von Vorteil, wenn das Rastmittel einen umlaufenden Vorsprung aufweist, der an der Innenseite der Seitenwandung angeordnet ist. Insbesondere kann der Vorsprung ringförmig ausgebildet sein. Darüber hinaus kann das Rastmittel auch mehrere getrennte Erhebungen umfassen, die z.B. als Noppen ausgebildet sein können.

Um die Feuchtigkeit im Aufnahmeraum einzustellen, kann der Behandlungsstoff ein Trockenmittel umfassen. Silicagel und Molekularsieb eignen sich besonders als Trockenmittel.

Weiterhin hat sich erfindungsgemäß bewährt, wenn der Behälterkörper zylindrisch ausgebildet ist.

Die Abdeckung kann vorzugsweise als eine Scheibe ausgebildet sein. Besonders bevorzugt weist die Scheibe an Ihrem Umfangsrand keine Nut auf.

Die Abdeckung kann vorzugsweise ein offenporiges Material aufweisen. Insbesondere kann Pappe, ein Vliesstoff (z.B. Tyvek), eine Gitterstruktur, eine perforierte Kunststoffscheibe und/oder ein Gewebe eingesetzt werden. Weiterhin ist erfindungsgemäß bevorzugt, wenn die Abdeckung auf dem Behandlungsstoff angeordnet ist.

Vorzugsweise wird die Abdeckung zwischen Rastmittel und Behandlungsstoff gehalten. Dabei verhindert das Rastmittel, dass die Abdeckung in einer ersten Richtung zur Öffnung hin bewegt wird. Der Behandlungsstoff verhindert, dass die Abdeckung in einer zweiten, entgegensetzten Richtung bewegt wird. Der Behandlungsstoff bildet dabei eine Auflage für die Abdeckung. Auf diese Weise kann der Behandlungsstoff einen Anschlag für die Abdeckung bilden. Dabei kann die Abdeckung mit einem Spiel zwischen Rastmittel und Behandlungsstoff angeordnet sein.

Darüber hinaus ist vorteilhaft, wenn die Seitenwandung sich im Wesentlichen parallel zu einer Behälterlängsachse erstreckt. Eine zur leichteren Entformung des Spritzgussteils vorgesehene geringfügige Entformungsschräge soll dadurch nicht ausgeschlossen sein.

Nach einer vorteilhaften Ausgestaltung weist der Behälter einen Verschluss zum Verschließen der Öffnung auf.

Das Spritzgussteil kann vorzugsweise aus einem Kunststoff ausgewählt aus der folgenden Gruppe gefertigt sein: PP (Polypropylen), HDPE (High Density Polyethylen), PET (Polyethylenterephthalat), PC (Polycarbonat), COC (Cyclo-Olefin-Copolymer).

Weiterhin hat sich bewährt, wenn das Spritzgussteil aus einem Kunststoff mit einem Biege-E-Modul zwischen 500 MPa und 3500 MPa, vorzugsweise zwischen 1000 MPa und 3000 MPa hergestellt ist. Der E-Modul kann nach DIN 53457 in der zum 1. Dezember 2014 gültigen Fassung bestimmt werden.

Die erfindungsgemäße Aufgabe wird bei einem Verfahren zur Herstellung eines Behälters mit den Merkmalen von Anspruch 11 gelöst. Demnach weist das Verfahren zum Herstellen eines Behälters folgende Schritte auf:
- Spritzgießen eines Behälterkörpers in einer Spritzgießform, wobei die Spritzgießform derart ausgebildet ist, dass der Behälterkörper eine Seitenwandung, einen mit der Seitenwandung verbundenen Behälterboden, eine Öffnung, eine Kammer für einen Behandlungsstoff und ein an der Innenseite der Seitenwandung angeordnetes Rastmittel für eine Abdeckung der Kammer aufweist;
- Entformen des Behälterkörpers aus der Spritzgießform;
- Einfüllen des Behandlungsstoffes in die Kammer mit einer Einfüllvorrichtung;
- Einbringen einer Abdeckung der Kammer durch die Öffnung, wobei die Abdeckung hinter dem Rastmittel einrastet und ein Austreten des festen Behandlungsstoffes aus der Kammer verhindert.

Auf diese Weise kann zuverlässig und kostengünstig ein Behälterkörper hergestellt werden, bei dem die Seitenwandung integral mit dem Behälterkörper verbunden ist. Bearbeitungsschritte, wie insbesondere eine spanende Bearbeitung des Behälterkörpers sind nicht erforderlich. Insbesondere eignet sich das Verfahren zur Herstellung des erfindungsgemäßen Behälters.

Erfindungsgemäß ist bevorzugt, dass beim Spritzgießen ein Abschnitt der Spritzgießform die Innenseite der Seitenwandung und das Rastmittel begrenzt.

Weiterhin ist erfindungsgemäß bevorzugt, dass das Entformen als Zwangsentformung durchgeführt wird, wobei ein Teil der Spritzgießform unter Verformung der Seitenwandung über das Rastmittel bewegt wird. Dies trägt zu einer kostengünstigen Herstellung bei.

Weitere Ziele, Merkmale, Vorteile und Anwendungsmöglichkeiten der vorliegenden Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger sinnvoller Kombination den Gegenstand der Erfindung, auch unabhängig von der Zusammenfassung in einzelnen Ansprüchen oder deren Rückbeziehungen.

Es zeigen:
- Fig. 1a:: eine Draufsicht auf einen erfindungsgemäßen Behälter;
- Fig. 1b:: einen Querschnitt durch den Behälter aus Fig. 1a entlang der Linie A-A;
- Fig. 1c:: das vergrößerte Detail B aus Fig. 1b;
- Fig. 2a - 2b:: das Befüllen der Kammer des Behälters aus Fig. 1a;
- Fig. 2c - 2d:: das Einbringen der Abdeckung in den Behälter aus Fig. 2a.

Die Figuren zeigen einen Behälter 1 mit einem Behälterkörper 2, der einen Aufnahmeraum 3 bildet. Der Behälterkörper 2 weist eine Seitenwandung 4 und einen integral mit der Seitenwandung 4 verbundenen Behälterboden 5 auf.

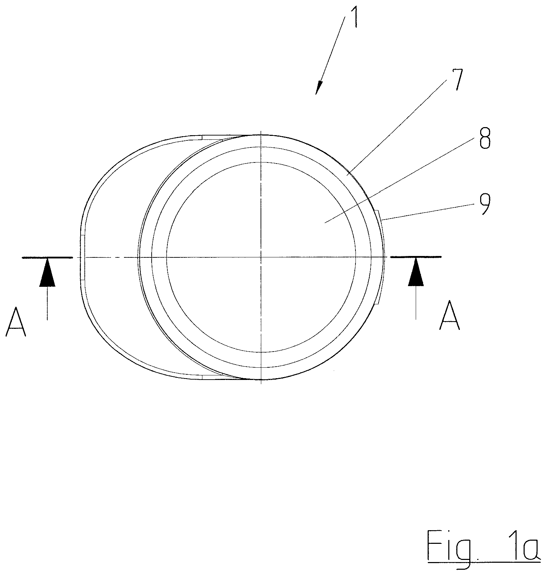

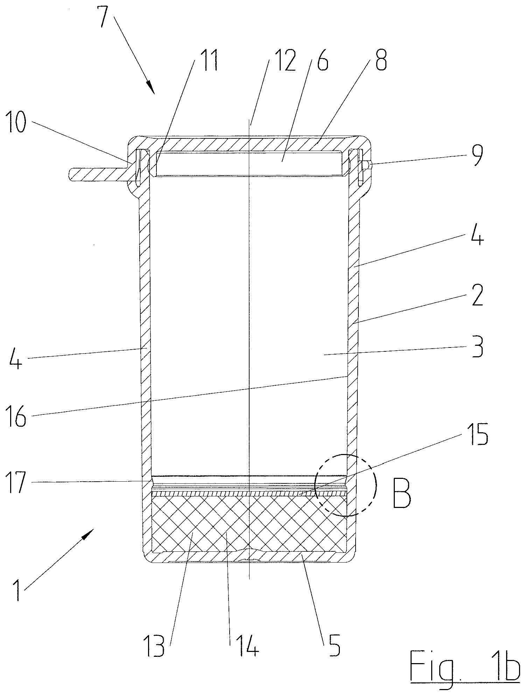

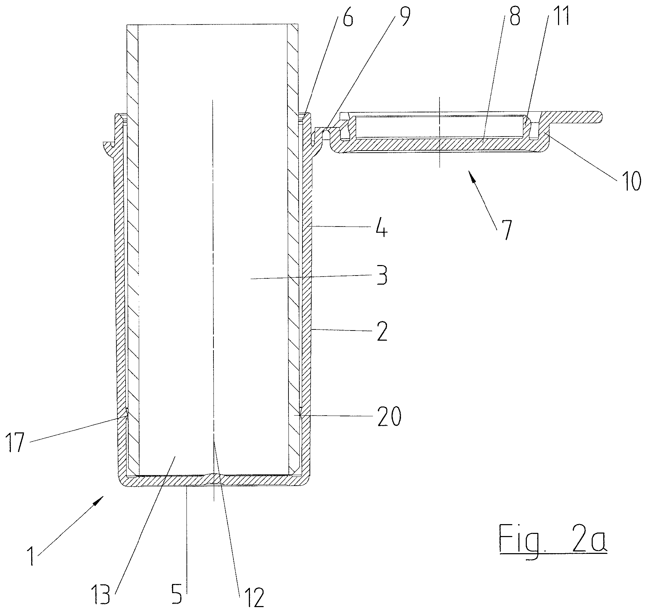

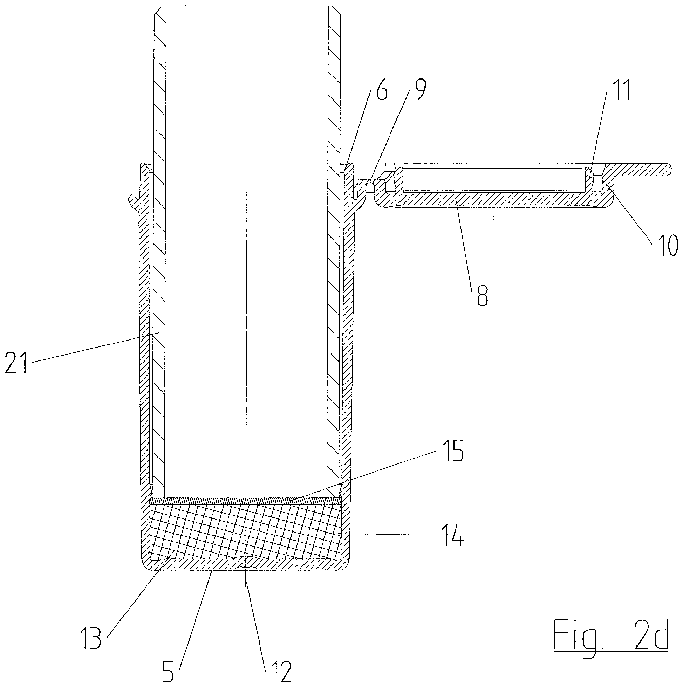

Der Behälterkörper 2 weist eine Öffnung 6 auf. Diese ist in dem dargestellten Ausführungsbeispiel an der den Behälterboden 5 gegenüberliegenden Seite des Behälterkörpers 2 angeordnet. Der Behälter 1 weist einen Verschluss 7 zum Verschließen der Öffnung 6 auf. Im dargestellten Ausführungsbeispiel ist der Verschluss 7 als ein Deckel 8 ausgebildet. Dieser ist beweglich an dem Behälterkörper 2 angeordnet. Hierzu ist ein Scharnier 9 vorgesehen, über das der Deckel 8 beweglich an dem Behälterkörper 2 angeordnet ist. Das Scharnier 9 kann als ein Filmscharnier oder ein Butterfly-Scharnier ausgebildet sein. Der Deckel 8 und der Behälterkörper 2 sind dabei als ein zusammenhängendes Spritzgussteil ausgebildet. Der Deckel 8 kann eine geöffnete oder eine geschlossene Position einnehmen. Die geschlossene Position ist in den Figuren 1a und 1b dargestellt, während die geöffnete Position in den Figuren 2a bis 2d dargestellt ist. Der Deckel 8 weist eine Schürze 10 auf. Weiterhin weist der Deckel 8 einen Dichtabschnitt 11 auf. Dieser ist als ein ringförmiges Element ausgebildet, das mit seiner Außenseite an der Innenseite der Seitenwandung 4 anliegt. Zusätzlich zur Öffnung 6 weist der Behälterkörper 2 keine weiteren Öffnungen auf. Die Öffnung 6 bildet dabei eine Entnahmeöffnung, durch die das Verpackungsgut aus dem Aufnahmeraum 3 entnommen werden kann.

Im dargestellten Ausführungsbeispiel ist der Behälterkörper 2 zylindrisch ausgebildet. Die Seitenwandung 4 erstreckt sich im Wesentlichen parallel zu einer Längsachse 12 des Behälterkörpers 2.

Der Behälterkörper 2 weist darüber hinaus eine Kammer 13 auf, die mit einem Behandlungsstoff 14 befüllt ist. In den Figuren ist der Behandlungsstoff nur schematisch durch die gekreuzte Schraffur angedeutet. Der Behandlungsstoff hat eine feste Konsistenz und kann insbesondere als eine Schüttung in der Kammer 13 angeordnet sein. Insbesondere kann der Behandlungsstoff pulverförmig sein und/oder körnige Partikel aufweisen. Erfindungsgemäß ist dabei bevorzugt, wenn der Behandlungsstoff ein Trockenmittel wie z.B. Silikagel ist.

Die Kammer 13 ist mit einer Abdeckung 15 versehen. Diese verhindert ein Austreten des festen Behandlungsstoffes aus der Kammer 13. Die Abdeckung 15 ist jedoch zu einem gewissen Grad feuchtigkeitsdurchlässig und gasdurchlässig und ermöglicht daher, dass z.B. Feuchtigkeit aus dem Aufnahmeraum 3 durch die Abdeckung 15 hindurch zu dem Behandlungsstoff gelangen und von diesem gebunden werden kann. Die Abdeckung 15 kann z.B. Pappe, einen Vliesstoff (z.B. Tyvek) eine Gitterstruktur, eine perforierte Kunststoffscheibe und/oder ein Gewebe aufweisen. Besonders geeignet ist im vorliegenden Fall wegen der elastischen Eigenschaften die Verwendung von Pappe, einer Gitterstruktur aus Kunststoff und/oder einer perforierten Kunststoffscheibe.

In dem Aufnahmeraum 3 kann ein nicht dargestelltes Verpackungsgut angeordnet sein. Das Verpackungsgut kann insbesondere ein pharmazeutisches Produkt, wie ein Medikament sein. Besonders geeignet ist der Behälter darüber hinaus für chemische Stoffe und Analysestoffe, insbesondere auch in Form von Teststreifen.

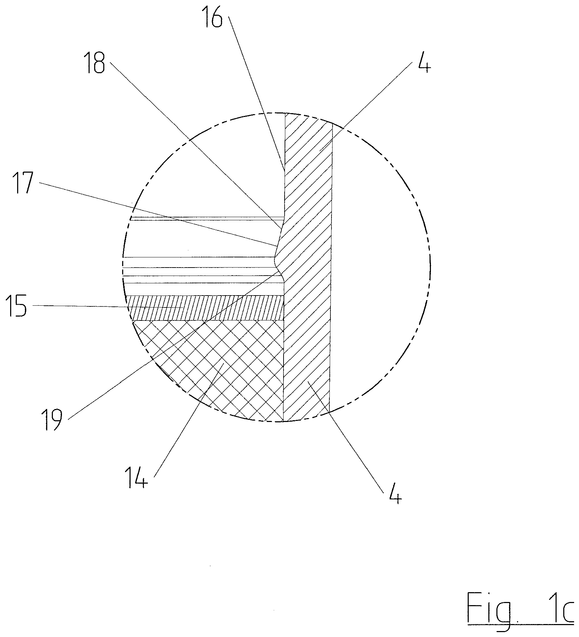

Der Behälterkörper 2 ist als ein Spritzgussteil aus Kunststoff ausgebildet. Im dargestellten Ausführungsbeispiel umfasst das Spritzgussteil darüber hinaus den Deckel 8, der über das Scharnier 9 mit dem Behälterkörper 2 verbunden ist. Der Behälterboden 5 und die Seitenwandung 4 sind integral miteinander verbunden. An der Innenseite 16 der Seitenwandung 4 ist ein Rastmittel 17 angeordnet. Im dargestellten Ausführungsbeispiel weist das Rastmittel 17 einen Vorsprung auf. Auf diese Weise ergibt sich eine Hinterschneidung. Der Vorsprung des Rastmittels ist im dargestellten Ausführungsbeispiel ringförmig umlaufend ausgebildet. Die Abdeckung 15, welche, wie später noch im Einzelnen erläutert wird, durch die Öffnung 6 eingesetzt wird, ist hinter dem Rastmittel 17 eingerastet. Dies kann besonders gut den Figuren 1b und 1c entnommen werden.

Figur 1c lässt darüber hinaus gut erkennen, wie das Rastmittel 17 gegenüber der Innenseite 16 der Seitenwandung 4 vorspringt. Dabei hat sich als vorteilhaft herausgestellt, wenn das Rastmittel 17 gegenüber der Innenseite 16 der Seitenwandung 4 um einen Wert zwischen 0,1 mm und 1,0 mm, besonders bevorzugt zwischen 0,15 mm und 0,5 mm vorspringt. Dementsprechend ist bei der dargestellten Ausführungsform die lichte Weite des Behälterkörpers 2 im Bereich des Rastmittels um 0,2 mm bis 2,0 mm, besonders bevorzugt zwischen 0,3 mm und 1,0 mm, kleiner als im Bereich der Seitenwandung 4 außerhalb des Rastmittels 17.

Figur 1c lässt weiter erkennen, dass das Rastmittel 17 an seiner zu der Öffnung 6 weisenden Seite eine zu der Längsachse 12 des Behälterkörpers 2 geneigte erste Gleitfläche 18 aufweist. Beim Einbringen der Abdeckung 15 durch die Öffnung 6 kann die Abdeckung 15 an der ersten Gleitfläche 18 entlang gleiten, bevor sie hinter dem Rastmittel 17 einrastet.

Auf der der Öffnung 6 abgewandten Seite weist das Rastmittel 17 eine zur Längsachse 12 des Behälterkörpers 2 geneigte zweite Gleitfläche 19 auf. Diese erleichtert insbesondere die Entformung nach dem Spritzgießen.

Figuren 1b und 1c lassen weiterhin gut erkennen, dass die Abdeckung 15 auf einer der Kammer 13 zugewandten Seite des Rastmittels 17 angeordnet ist. Die Abdeckung 15 liegt an der Seitenwandung 4 in einem an das Rastmittel 17 angrenzenden Bereich der Seitenwandung 4 an.

Figur 1c lässt weiterhin erkennen, dass das maximale Volumen der Kammer 13, das durch die Lage des Rastmittels 17 und die sich daraus ergebende höchste Position der Abdeckung 15 bestimmt ist, etwas größer ist als das Volumen des darin aufgenommenen Behandlungsstoffes 14. Dies ist in Figur 1c daran gut erkennbar, dass die Abdeckung 15, welche auf den Behandlungsstoff 14 aufliegt, ein kleines Stück unterhalb des Rastmittels 17 angeordnet ist. Es verbleibt also ein Spiel für die Abdeckung 15. Dieses trägt dazu bei, dass die Abdeckung 15 leichter eingerastet werden kann. Darüber hinaus können Füllhöhenunterschiede ausgeglichen werden. Die Seitenwandung 4 weist zudem auf der der Kammer 13 zugewandten Seite der Abdeckung 15 keinen Vorsprung auf. Die Abdeckung 15 wird demnach zwischen dem Behandlungsstoff 14 und dem Rastmittel 17 gehalten.

Die Abdeckung 15 ist elastisch verformbar, so dass sie beim Einbringen der Abdeckung 15 an dem Rastmittel 17 unter elastischer Verformung der Abdeckung vorbei bewegt werden kann.

Bei der Herstellung des Behälters wird der Behälterkörper 2 in einer Spritzgießform hergestellt. Die Spritzgießform ist derart ausgebildet, dass der Behälterkörper 2 die Seitenwandung 4, den mit der Seitenwandung 4 verbundenen Behälterboden 5, die Öffnung 6, die Kammer 13 und das an der Innenseite 16 der Seitenwandung 4 angeordnete Rastmittel 17 aufweist. Im dargestellten Ausführungsbeispiel wird der Verschluss 7 mit dem Scharnier 9 einstückig mit dem Behälterkörper 2 hergestellt. Die Spritzgießform ist daher derart ausgebildet, dass diese Elemente in demselben Spritzgießvorgang mit hergestellt werden können.

Nach dem Spritzgießen wird der Behälterkörper 2 aus der Spritzgießform entformt. Das Entformen wird dabei als eine Zwangsentformung durchgeführt, bei der ein Teil der Spritzgussform unter Verformung der Seitenwandung 4 über das Rastmittel 17 bewegt wird. Daran anschließend folgt das Einfüllen des Behandlungsstoffes 14 in die Kammer 13 und das Einbringen der Abdeckung 15. Dies ist in den Figuren 2a bis 2d im Einzelnen dargestellt.

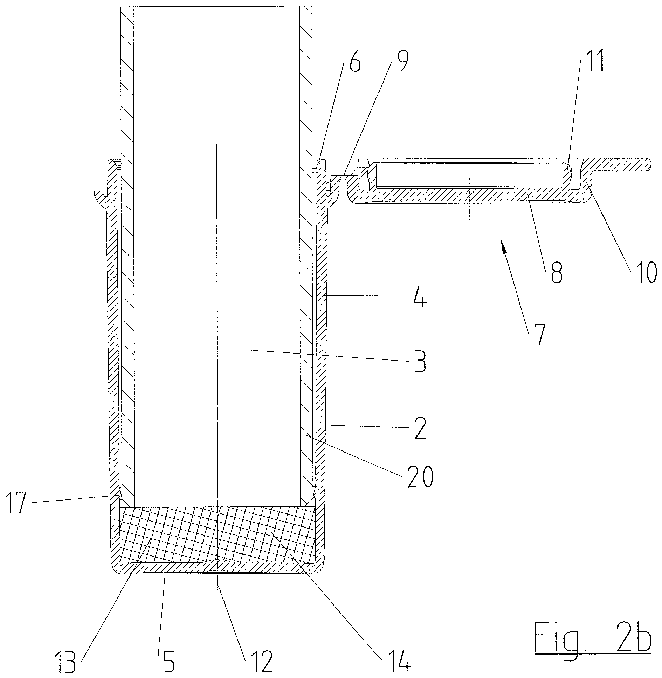

In Figur 2a ist der Behälterkörper 2 mit dem Verschluss 7 nach dem Entformen dargestellt. Weiterhin ist eine Einfülleinrichtung 20 erkennbar, die einen Einfülldorn aufweist, der bis zum untersten Bereich der Kammer 13 in den Behälterkörper 2 eingefahren ist. Die Einfülleinrichtung 20 liegt dabei fast auf dem Behälterboden 5 an. In der in der Figur 2a dargestellten Position beginnt die Befüllung mit dem Behandlungsstoff 14. Während des Befüllens wird die Einfülleinrichtung 20 langsam zur Öffnung 6 hin bewegt. Der Vorgang des Einfüllens des Behandlungsstoffes 14 ist abgeschlossen, wenn die gewünschte Menge an Behandlungsstoff 14 in die Kammer 13 eingefüllt wurde. Dies ist in Figur 2b dargestellt. Da das Volumen des Behandlungsstoffes 14 etwas kleiner ist als das maximale Volumen der Kammer 13, welches durch die Lage des Rastmittels 17 definiert ist, befindet sich die Oberkante des Behandlungsstoffes 14 unterhalb des Rastmittels 17.

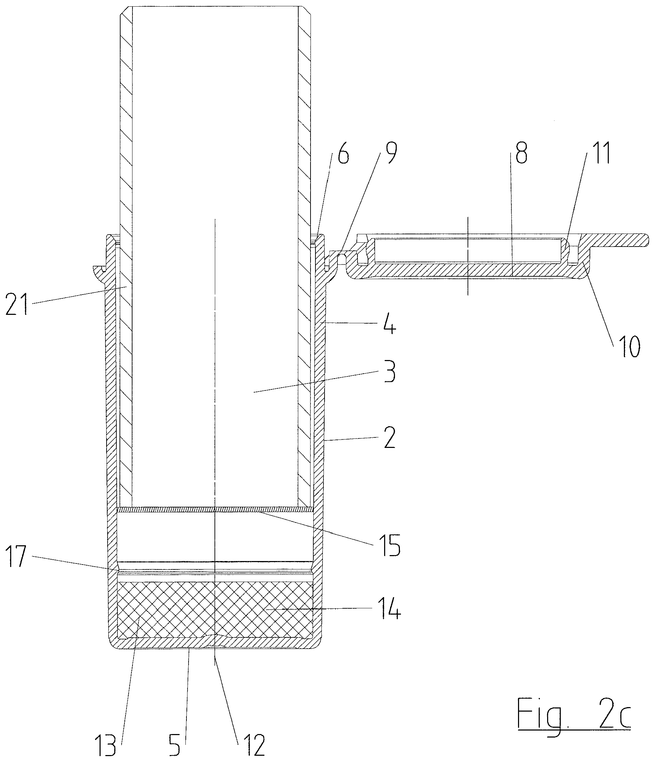

Die Einfülleinrichtung 20 wird dann vollständig aus dem Behälterkörper 2 herausgezogen. Daran anschließend wird die Abdeckung 15 mit einer Zuführeinrichtung 21 durch die Öffnung 6 eingebracht. Dies ist in Figur 2c dargestellt. Hier ist die ein Stück weit in den Behälterkörper 2 eingefahrene Zuführeinrichtung 21 mit der Abdeckung 15 gut zu erkennen. Die Zuführeinrichtung 21 wird dann so lange zum Behälterboden 5 hin bewegt, bis die Abdeckung 15 hinter dem Rastmittel 17 einrastet und auf dem Behandlungsstoff 14 zu liegen kommt. Daran anschließend wird die Zuführeinrichtung 21 aus dem Behälterkörper 2 gezogen. Der Aufnahmeraum 3 kann jetzt mit einem Verpackungsgut gefüllt werden.

## Patentansprüche

1. Behälter mit einem Behälterkörper (2), der einen Aufnahmeraum (3) für ein Verpackungsgut bildet, wobei der Behälterkörper (2) eine Seitenwandung (4) und einen integral mit der Seitenwandung (2) verbundenen Behälterboden (5) aufweist, wobei der Behälterkörper (2) eine Öffnung (6) aufweist, wobei der Behälterkörper (2) eine Kammer (13) aufweist, die mit einem festen Behandlungsstoff (14) befüllt ist, wobei die Kammer (13) mit einer Abdeckung (15) versehen ist, welche ein Austreten des festen Behandlungsstoffes (14) aus der Kammer (13) verhindert und feuchtigkeitsdurchlässig und/oder gasdurchlässig ist, wobei der Behälterkörper (2) ein Spritzgussteil aus Kunststoff aufweist, das den Behälterboden (5) und die integral mit dem Behälterboden (5) verbundene Seitenwandung (4) bildet, wobei an einer Innenseite (16) der Seitenwandung (4) ein Rastmittel (17) angeordnet ist, hinter dem die Abdeckung (15) eingerastet ist, **dadurch gekennzeichnet, dass** das Rastmittel (17) auf seiner zu der Öffnung (6) weisenden Seite eine zu einer Längsachse (12) des Behälterkörpers (2) geneigte erste Gleitfläche (18) aufweist, welche mit einem Neigungswinkel von weniger als 20° zu der Längsachse (12) geneigt ist, wobei das Rastmittel (17) und die Abdeckung (15) so ausgebildet sind, dass die Abdeckung (15) beim Einbringen unter Verformung der Abdeckung (15) an der ersten Gleitfläche (18) entlanggleitet, bevor sie hinter dem Rastmittel einrastet, und auf seiner der Öffnung (6) abgewandten Seite eine zur Längsachse (12) des Behälterkörpers (2) geneigte zweite Gleitfläche (19) aufweist, die mit einem Neigungswinkel von weniger als 45 ° zur Längsachse (12) des Behälterkörpers (2) geneigt ist, wobei der Neigungswinkel der zweiten Gleitfläche größer als 20° ist.

2. Behälter nach Anspruch 1, **dadurch gekennzeichnet, dass** das Rastmittel (17) einen Vorsprung aufweist, der an der Innenseite (16) der Seitenwandung (4) angeordnet ist.

3. Behälter nach Anspruch 1 oder 2, **dadurch gekennzeichnet, dass** das Rastmittel (17) gegenüber der Innenseite (16) der Seitenwandung (4) um einen Wert zwischen 0,1 mm und 1,0 mm vorspringt.

4. Behälter nach einem der Ansprüche 1 bis 3, **dadurch gekennzeichnet, dass** die Abdeckung (15) auf einer der Kammer (13) zugewandten Seite des Rastmittels (17) angeordnet ist.

5. Behälter nach einem der Ansprüche 1 bis 4, **dadurch gekennzeichnet, dass** die Abdeckung (15) an der Seitenwandung (4) in einem an das Rastmittel (17) angrenzenden Bereich der Seitenwandung (4) anliegt.

6. Behälter nach einem der Ansprüche 1 bis 5, **dadurch gekennzeichnet, dass** das maximale Volumen der Kammer (13), das durch die Lage des Rastmittels (17) und die sich daraus ergebende Position der Abdeckung (15) bestimmt ist, etwas größer ist als das Volumen des darin aufgenommenen Behandlungsstoffes.

7. Behälter nach einem der Ansprüche 1 bis 6, **dadurch gekennzeichnet, dass** die Abdeckung (15) mit Spiel zwischen dem Rastmittel (17) und dem Behandlungsstoff (14) angeordnet ist, wobei der Behandlungsstoff (14) als eine Schüttung in der Kammer (13) angeordnet ist.

8. Behälter nach einem der Ansprüche 1 bis 7, **dadurch gekennzeichnet, dass** die Seitenwandung (4) auf der der Kammer (13) zugewandten Seite der Abdeckung (15) keinen Vorsprung aufweist, um die Abdeckung zu fixieren.

9. Behälter nach einem der Ansprüche 1 bis 8, **dadurch gekennzeichnet, dass** die Abdeckung (15) derart elastisch verformbar ist, dass sie beim Einbringen der Abdeckung (15) an dem Rastmittel (17) vorbei bewegt werden kann.

10. Verfahren zum Herstellen eines Behälters mit folgenden Schritten:
- Spritzgießen eines Behälterkörpers (2) in einer Spritzgießform, wobei die Spritzgießform derart ausgebildet ist, dass der Behälterkörper (2) eine Seitenwandung (4), einen mit der Seitenwandung (4) verbundenen Behälterboden (5), eine Öffnung (6), eine Kammer (13) für einen Behandlungsstoff (14) und ein an der Innenseite (16) der Seitenwandung (4) angeordnetes Rastmittel (17) für eine Abdeckung (15) der Kammer aufweist, wobei das Rastmittel (17) auf seiner zu der Öffnung (6) weisenden Seite eine zu einer Längsachse (12) des Behälterkörpers (2) geneigte erste Gleitfläche (18) aufweist, welche mit einem Neigungswinkel von weniger als 20° zu der Längsachse (12) geneigt ist, und wobei das Rastmittel auf seiner der Öffnung (6) abgewandten Seite eine zur Längsachse (12) des Behälterkörpers (2) geneigte zweite Gleitfläche (19) aufweist, die mit einem Neigungswinkel von weniger als 45 ° zur Längsachse (12) des Behälterkörpers (2) geneigt ist, wobei der Neigungswinkel der zweiten Gleitfläche größer als 20° ist;
- Entformen des Behälterkörpers (2) aus der Spritzgießform;
- Einfüllen des Behandlungsstoffes (14) in die Kammer (13) mit einer Einfüllvorrichtung;
- Einbringen einer Abdeckung (15) der Kammer (13) durch die Öffnung (6), wobei die Abdeckung (6) beim Einbringen unter Verformung der Abdeckung (15) an der ersten Gleitfläche (18) entlanggleitet, bevor sie hinter dem Rastmittel (17) einrastet und ein Austreten des festen Behandlungsstoffes aus der Kammer (13) verhindert.

## Claims

1. Container comprising a container body (2), which forms a receiving space (3) for goods to be packaged, wherein the container body (2) comprises a side wall (4) and a container base (5) integrally connected to the side wall (2), wherein the container body (2) has an opening (6), wherein the container body (2) has a chamber (13), which is filled with a solid treatment substance (14), wherein the chamber (13) is provided with a cover (15), which prevents the solid treatment substance (14) from leaving the chamber (13) and is moisture-permeable and/or gas-permeable, wherein the container body (2) has an injection-moulded part made of plastic which forms the container base (5) and the side wall (4) integrally connected to the container base (5), a latching means (17) being arranged on an inner side (16) of the side wall (4), behind which the cover (15) is latched-in, **characterized in that** the latching means (17) has, on its side facing towards the opening (6), a first sliding surface (18), which is inclined with respect to a longitudinal axis (12) of the container body (2) and is inclined at an angle of inclination of less than 20° to the longitudinal axis (12), wherein the latching means (17) and the cover (15) are formed such that the cover (15) slides along the first sliding surface (18) during insertion, deforming the cover (15) before it engages behind the latching means, and on its side facing away from the opening (6) has a second sliding surface (19) which is inclined with respect to the longitudinal axis (12) of the container body (2) and is inclined at an angle of inclination of less than 45° to the longitudinal axis (12) of the container body (2), wherein the angle of inclination of the second sliding surface is greater than 20°.

2. Container according to claim 1, **characterized in that** the latching means (17) comprises a protrusion, which is arranged on the inner side (16) of the side wall (4).

3. Container according to claim 1 or 2, **characterized in that** the latching means (17) protrudes with respect to the inner side (16) of the side wall (4) by a value between 0.1 mm and 1.0 mm.

4. Container according to any one of claims 1 to 3, **characterized in that** the cover (15) is arranged on a side of the latching means (17) facing towards the chamber (13).

5. Container according to any one of claims 1 to 4, **characterized in that** the cover (15) lies against the side wall (4) in a region of the side wall (4) adjacent to the latching means (17).

6. Container according to any one of claims 1 to 5, **characterized in that** the maximum volume of the chamber (13), which is determined by the position of the latching means (17) and the position of the cover (15) resulting therefrom, is slightly greater than the volume of the treatment substance received therein.

7. Container according to any one of claims 1 to 6, **characterized in that** the cover (15) is arranged with expansion space between the latching means (17) and the treatment substance (14), the treatment substance (14) being arranged as a bulk in the chamber (13).

8. Container according to any one of claims 1 to 7, **characterized in that** on the side of the cover (15) facing towards the chamber (13), the side wall (4) does not have a protrusion for fixing the cover (15).

9. Container according to any one of claims 1 to 8, **characterized in that** the cover (15) is elastically deformable such that, during insertion of the cover (15), the cover can be moved past the latching means (17).

10. Method of producing a container, comprising the steps of:
- injection-moulding a container body (2) in an injection mould, wherein the injection mould is formed such that the container body (2) has a side wall (4), a container base (5) connected to the side wall (4), an opening (6), a chamber (13) for a treatment substance (14) and a latching means (17) for a cover (15) of the chamber, said latching means being arranged on the inner side (16) of the side wall (4), wherein the latching means (17) has, on its side facing towards the opening (6), a first sliding surface (18), which is inclined with respect to a longitudinal axis (12) of the container body (2) and is inclined at an angle of inclination of less than 20° to the longitudinal axis (12), and wherein the latching means has, on its side facing away from the opening (6), a second sliding surface (19) which is inclined with respect to the longitudinal axis (12) of the container body (2) and is inclined at an angle of inclination of less than 45° to the longitudinal axis (12) of the container body (2), wherein the angle of inclination of the second sliding surface is greater than 20°;
- demoulding the container body (2) from the injection mould;
- introducing the treatment substance (14) into the chamber (13) using a filling device;
- inserting a cover (15) of the chamber (13) through the opening (6), wherein the cover (6) slides along the first sliding surface (18) during insertion, while deforming the cover (15), before latching in behind the latching means (17) and preventing the solid treatment substance from coming out of the chamber (13).

## Revendications

1. Conteneur pourvu d'un corps de conteneur (2) qui forme un espace de réception (3) pour un produit à emballer, le corps de conteneur (2) comportant une paroi latérale (4) et un fond de conteneur (5) intégralement connecté à la paroi latérale (2) le corps de conteneur (2) comportant une ouverture (6), le corps de conteneur (2) comportant un compartiment (13) qui est rempli d'une substance de traitement (14) solide, le compartiment (13) étant muni d'un couvercle (15), lequel empêche que la substance de traitement (14) solide ne s'échappe du compartiment (13) et est perméable à l'humidié et/ou perméable au gaz, le corps de conteneur (2) comportant une pièce en matière plastique moulée par injection, qui forme le fond de conteneur (5) et la paroi latérale (4) intégralement connecté au fond de conteneur (5), sur une face intérieure (16) de la paroi latérale (4) étant placé un moyen d'enclenchement (17) derrière lequel est enclenché le couvercle (15), **caractérisé en ce que** sur sa face dirigée vers l'ouverture (6), le moyen d'enclenchement (17) comporte une première surface de coulissement (18) inclinée vers un axe longitudinal (12) du corps de conteneur (2), laquelle est inclinée de la valeur d'un angle d'inclinaison de moins de 20° vers l'axe longitudinal (12), le moyen d'enclenchement (17) et le couvercle (15) étant conçus de telle sorte que lors de l'introduction, sous déformation du couvercle (15), le couvercle (15) coulisse le long de la surface de coulissement (18), avant de s'enclencher derrière le moyen d'enclenchement et sur sa face détournée de l'ouverture (6), comporte une deuxième surface de coulissement (19) inclinée vers l'axe longitudinal (12) du corps de conteneur (2), qui est inclinée avec un angle d'inclinaison de moins de 45° vers l'axe longitudinal (12) du corps de conteneur (2), l'angle d'inclinaison de la deuxième surface de coulissement étant supérieur à 20°.

2. Conteneur selon la revendication 1, **caractérisé en ce que** le moyen d'enclenchement (17) comporte une saillie qui est placée sur la face intérieure (16) de la paroi latérale (4).

3. Conteneur selon la revendication 1 ou 2, **caractérisé en ce que** le moyen d'enclenchement (17) saillit par rapport à la face intérieure (16) de la paroi latérale (4) d'une valeur comprise entre 0,1 mm et 1,0 mm.

4. Conteneur selon l'une des revendications 1 à 3, **caractérisé en ce que** le couvercle (15) est placé sur une face du moyen d'enclenchement (17) qui est dirigée vers le compartiment (13).

5. Conteneur selon l'une des revendications 1 à 4, **caractérisé en ce que** le couvercle (15) s'appuie sur la paroi latérale (4) dans une zone de la paroi latérale (4) qui est adjacente au moyen d'enclenchement (17).

6. Conteneur selon l'une des revendications 1 à 5, **caractérisé en ce que** le volume maximal du compartiment (13), qui est déterminé par l'emplacement du moyen d'enclenchement (17) et la position du couvercle (15) qui en résulte est légèrement supérieur au volume de la substance de traitement qui y est réceptionnée.

7. Conteneur selon l'une des revendications 1 à 6, **caractérisé en ce que** le couvercle (15) est placé avec du jeu entre le moyen d'enclenchement (17) et la substance de traitement (14), la substance de traitement (14) étant placée en vrac dans le compartiment (13).

8. Conteneur selon l'une des revendications 1 à 7, **caractérisé en ce que** sur la face du couvercle (15) qui est dirigée vers le compartiment (13), la paroi latérale (4) ne comporte aucune saillie pour fixer le couvercle.

9. Conteneur selon l'une des revendications 1 à 8, **caractérisé en ce que** le couvercle (15) est élastiquement déformable de telle sorte que lors de l'introduction du couvercle (15), il puisse être déplacé le long du moyen d'enclenchement (17).

10. Procédé, destiné à fabriquer un conteneur, comportant les étapes suivantes :
- mouler par injection un corps de conteneur (2) dans un moule d'injection, le moule d'injection étant conçu de telle sorte que le corps de conteneur (2) comporte une paroi latérale (4), un fond de conteneur (5), connecté à la paroi latérale (4), une ouverture (6), un compartiment (13) pour une substance de traitement (14) et un moyen d'enclenchement (17) pour un couvercle (15) du compartiment placé sur la face intérieure (16) de la paroi latérale (4), sur sa face dirigée vers l'ouverture (6), le moyen d'enclenchement (17) comportant une première surface de coulissement (18) inclinée vers l'axe longitudinal (12) du corps de conteneur (2), laquelle est inclinée avec un angle d'inclinaison de moins de 20° vers l'axe longitudinal (12) et sur sa face détournée de l'ouverture (6), le moyen d'enclenchement comportant une deuxième surface de coulissement (19) inclinée vers l'axe longitudinal (12) du corps de conteneur (2), qui est inclinée avec un angle d'inclinaison de moins de 45° vers l'axe longitudinal (12) du corps de conteneur (2), l'angle d'inclinaison de la deuxième surface de coulissement étant supérieur à 20° ;
- démouler le corps de conteneur (2) du moule d'injection ;
- verser la substance de traitement (14) dans le compartiment (13) avec un dispositif de remplissage ;
- introduire un couvercle (15) du compartiment (13) à travers l'ouverture (6), le couvercle (15) coulissant le long de la première surface de coulissement (18) lors de l'introduction sous déformation du couvercle (6) avant de s'enclencher derrière le moyen d'enclenchement (17) et empêchant que la substance de traitement solide ne s'échappe du compartiment (13).
